Europäisches Patentamt

(19) European Patent Office

Office européen des brevets

(11) Numéro de publication: **0 281 512**
A1

# (12) DEMANDE DE BREVET EUROPEEN

(21) Numéro de dépôt: 88810042.7

(22) Date de dépôt: 27.01.88

(51) Int. Cl.⁴: **B 23 H 1/02**
**B 23 H 1/10**

(30) Priorité: 03.02.87 CH 384/87

(43) Date de publication de la demande:
07.09.88 Bulletin 88/36

(84) Etats contractants désignés: **DE FR GB IT SE**

(71) Demandeur: **CHARMILLES TECHNOLOGIES S.A.**
**8-10, rue du Pré-de-la-Fontaine Zone industrielle de**
**Satigny**
**CH-1217 Meyrin 1 (CH)**

(72) Inventeur: **Girardin, Roger**
**8 chemin de l'Echarpine**
**CH-1214 Vernier (CH)**

**Diot, Jean-Claude**
**Les Grangettes Route du Bourg-Neuf**
**F-74140 Douvaine (FR)**

(74) Mandataire: **Hugelin, Christiane**
**c/o CHARMILLES TECHNOLOGIES SA Case postale 373**
**CH-1217 Meyrin 1 (CH)**

(54) Dispositif et procédé pour l'usinage par électroérosion.

㊹ Un dispositif d'usinage par électroérosion comporte une électrode-outil (2) animée d'un mouvement rotatif commandé par un servo-moteur (6) et présentant la forme d'un volume de révolution autour de son axe (4) de rotation. Un circuit de mesure (15,16,17) évalue en continu par rapport à une valeur de référence, le dégré de pollution du liquide diélectrique d'usinage. La mesure s'effectue soit grâce à un capteur de la tension instantanée $U_I$ de chaque étincelle et en la comparant à une valeur $U_b$ prédéterminée, déterminant ainsi le taux des étincelles dites de bas niveau, pour lesquelles $U_i \leq U_b$, un signal étant émis dès que ce taux dépasse un seuil prédéterminé, soit grâce à un capteur de courant actif durant le temps d'attente précédant l'éclatement de chaque étincelle, un signal étant émis dès qu'un seuil de courant prédéterminé est atteint. Un circuit d'asservissement (27,6) module en fonction de ce signal, la fréquence de rotation de l'électrode-outil (2).
Le détecteur (18) permet de détecter et de pallier l'apparition d'étincelles éjectées.

FIG. 8

EP 0 281 512 A1

## Description

Dispositif et procédé pour l'usinage par électroérosion

La présente invention a trait à un dispositif et à un procédé pour usiner rapidement et avec des densités de courant élevées par électroérosion.

On sait que, par rapport à d'autres méthodes plus conventionnelles, l'usinage par EDM est un procédé fort précis, mais assez lent. Il y a donc intérêt à améliorer le rendement du procédé, même s'il faut pour cela sacrifier un peu de précision, ce qui ne tire guère à conséquence dans certains cas, comme en ébauche par exemple.

La principale raison de la lenteur de l'usinage EDM à ce jour est la fragilité du liquide diélectrique d'usinage emprisonné dans l'intervalle séparant l'électrode-outil et la pièce à usiner, appelé fente d'usinage ou "gap", où il est carbonisé, vaporisé, ionisé, etc... par suite de l'échauffement provoqué par les étincelles qui éclatent entre ces électrodes et pollué par les déchets dûs à l'érosion. Comme ce "gap" est étroit, en général de l'ordre de 0,005 mm à 0,1 mm, il est difficile d'en éliminer les déchets dûs à la dégradation du diélectrique et à l'érosion et d'y renouveler ce dernier.

Le diélectrique liquide est constitué le plus souvent par des hydrocarbures et/ou de l'eau qui peuvent contenir divers additifs.

Les outils les plus usités sont soit un fil métallique mince (d'un diamètre de quelques dixièmes de mm) défilant de façon continue le long de la pièce à usiner, soit une électrode d'enfonçage.

Il existe différentes méthodes d'injection de liquide dans le gap servant à accélérer le renouvellement du diélectrique. Bien qu'efficaces dans une certain mesure, toutes ces méthodes se heurtent à l'étroitesse du gap, qui empêche la circulation rapide du liquide qu'il contient. La destruction du diélectrique et la dégradation des conditions d'usinage qu'elle entraîne est évidemment moins rapide lors d'usinages dit "à géométrie ouverte" où un certain renouvellement du diélectrique est possible, que lorsqu'il faut travailler "en géométrie fermée".

De plus, dans ce dernier cas, les gaz résultant de l'électroérosion et de la décomposition du diélectrique sont alors piégés dans le gap et entraînent l'apparition de défauts de surface. C'est surtout afin d'éviter ou de retarder cette décomposition du diélectrique qu'il est devenu usuel de limiter, dès le début de l'usinage, l'intensité du courant d'usinage et, par conséquent, la quantité de matière enlevée par unité de temps.

Lorsque, malgré cette précaution, le diélectrique commence à se dégrader au cours de l'usinage, les contre-mesures connues vont d'un renforcement temporaire de l'injection forcée de liquide dans le gap, grâce à un dispositif tel que celui décrit dans le brevet GB 2 074 074 par exemple, à l'élargissement de celui-ci, ou à une diminution de l'intensité moyenne par unité de surface de l'électrode-outil (ou densité) du courant d'usinage, ou à l'établissement d'un mouvement de pulsation de l'électrode-outil ou encore à l'augmenta tion du temps de repos entre deux impulsions successives. Sauf la première, elles aboutissent toutes à réduire la densité de courant moyenne. La première mesure est souvent inefficace ou inapplicable dans la plupart des géométries fermées car le flux du diélectrique est inhomogène, et les autres ralentissent ou interrompent l'usinage, ce qui abaisse son rendement. Jusqu'à présent, on s'imposait traditionnellement de se limter à des densités de courant d'usinage modestes, ne dépassant pas 10A/cm², même lorsqu'on prévoyait l'adoption de certaines contre-mesures, ceci afin d'éviter d'avoir à les enclencher massivement, destabilisant ainsi l'usinage. C'est pourquoi on s'était habitué à usiner au ralenti.

Contrairement à cet enseignement de l'état de la technique, l'invention vise à éviter de limiter d'emblée la densité du courant d'usinage et, par conséquent, à permettre des enlèvements de matière plus élevés. Mais surtout, un usinage avec une densité de courant élevée permet de travailler avec des électrodes de petites dimensions pour usiner des pièces de grandes dimensions, alors que, traditionnellement, l'électrode EDM a sensiblement le même encombrement que l'empreinte à usiner.

On peut par suite envisager la rationalisation et la fabrication en série des électrodes d'où un prix de revient réduit de l'électrode EDM, qui est traditionnellement façonnée sur mesure pour chaque usinage particulier.

L'un des buts de la présente invention consiste à ralentir la dégradation ou même à empêcher la destruction du diélectrique en accélérant son renouvellement dans le gap par une amélioration de sa circulation grâce à une électrode-outil rotative, ou à un fil-électrode à vitesse de défilement accélérée, et à usiner ainsi avec une densité de courant très supérieure aux densités traditionnelles en EDM (10A/cm²).

Un deuxième but consiste à détecter les symptômes qui annoncent la dégradation ou la destruction du diélectrique, à émettre un signal correspondant et à ajuster la fréquence de rotation de l'électrode ou sa vitesse de défilement en réponse à ce signal, afin d'augmenter la circulation du diélectrique dans le gap, palliant ainsi sa dégradation, et d'éviter une dégradation totale des conditions d'usinage.

Un troisième but est de maintenir en permanence un degré de pollution du diélectrique idéal et constant, correspondant à un diélectrique à la limite de sa destruction. En effet, il s'avère que cette "situation critique", (où le diélectrique présent dans le gap un tel degré de pollution qu'il est au bord de sa destruction et qu'il y a risque d'arrêt de l'usinage) correspond à un maximum d'enlèvement de matière et donc à un rendement optimum. Des essais de fraisage EDM ont confirmé que pour une densité de courant donnée, il existe une fréquence de rotation optimale pour l'électrode qui correspond au maximum d'enlèvement de matière, (voir figure 9 dont la partie hachurée correspond à un usinage bloqué). Il est possible de réaliser un asservissement de la rotation de l'électrode-outil présentant un temps de réponse suffisamment faible pour maintenir une telle "situation critique" en contrôlant la tension instantanée de chaque étincelle, et en régulant en conséquence la vitesse de rotation de l'électrode-outil, ou sa vitesse de défilement.

En effet, l'un des symptômes détectables qui sont de bons indices de la dégradation du diélectrique est une baisse excessive de cette tension instantanée d'étincelle, c'est-à-dire l'apparition d'étincelles " à bas niveau". On appelle ainsi des étincelles dont la tension chute en dessous d'une tension instantanée $U_b$ inférieure à une valeur prédéterminée. Cette valeur prédéterminée peut être, par exemple, voisine de la tension moyenne d'usinage de référence $U_{ref}$. On régule en effet la "vitesse d'avance" de l'électrode-outil en maintenant la tension moyenne d'usinage entre l'électrode-outil et la pièce à usiner à une valeur située autour de cette tension moyenne d'usinage de référence $U_{ref}$. Par "vitesse" d'avance", on entend la vitesse du déplacement réciproque entre l'électrode-outil et la pièce le long de la trajectoire d'usinage.

La présente invention a trait à un dispositif et à un procédé définis respectivement aux revendications 1 et 12. Le mouvement supplémentaire de l'électrode a pour effet de favoriser le renouvellement du diélectrique dans la fente d'usinage. On peut maintenant évacuer de la zone d'usinage les déchets dûs à l'érosion et à la décomposition du diélectrique, à la vitesse où ils sont produits, même pour une densité de courant élevée, sans interrompre ni ralentir l'usinage. Le débit de diélectrique usé ainsi que celui de diélectrique neuf peuvent donc être dosés en ajustant la vitesse de rotation d'une électrode rotative ou l'accélération d'un fil-électrode.

La fréquence de rotation de l'électrode, ou sa vitesse de défilement, sera réglée de préférence de façon à ce que le taux d'étincelle à bas niveau n'excède pas une valeur de référence prédéterminée qui permette de maintenir l'usinage dans la "situation critique" décrite ci-dessus. C'est un taux idéal, correspondant à un degré de pollution de la fente d'usinage suffisamment élevé pour que l'enlèvement de matière soit le plus élevé possible pour la densité de courant utilisée, mais légèrement inférieur à celui qui provoquerait la détérioration des conditions de l'usinage ou même son arrêt complet, par suite de la destruction du diélectrique. Il tient en particulier compte des courts-circuits. Ce réglage permet d'obtenir la vitesse de rotation optimale, correspondant au maximum d'enlèvement de matière pour une densité de courant donnée.

Si toutefois ce taux d'étincelles à bas-niveau de référence, (donc cette situation critique correspondant à un enlèvement de matière optimum), n'était pas atteignable malgré une fréquence de rotation minimale, il faudrait alors dimimuer l'intervalle moyen entre les électrodes (appelé "gap") et par suite cette tension de référence U afin de pouvoir usiner avec un enlèvement de matière optimum. La mesure de la tension instantanée de chaque étincelle présente un autre très grand avantage : cela permet de contrôler les étincelles éjectées. En effet, la rotation de l'électrode-outil provoque le phénomène parasite suivant : les étincelles s'amorcent dans le "gap", mais une fraction d'entre elles peut être éjectée du "gap" vers le milieu extérieur par le mouvement du diélectrique induit par la rotation de l'électrode. Ce type d'étincelles, dites étincelles "éjectées" perdent leur pouvoir érosif, provoquant la vaporisation du diélectrique, et génèrent des états de surface irréguliers. Elles se distinguent par une tension instantanée croissant en fonction du temps. Pour qu'apparaissent les premières étincelles éjectées, il faut que la vitesse tangentielle de l'électrode soit suffisante pour qu'un point de sa surface décrive une distance proche de la valeur du gap pendant la durée de l'étincelle (par ex. 100μs). Leur apparition signale qu'il est inutile, voire dangereux, de poursuivre l'accélération de la rotation de l'électrode-outil.

Grâce au dispositif de la présente invention on peut éviter les effets négatifs des étincelles éjectées. On peut en particulier, interrompre l'étincelle en cours en coupant le courant d'usinage, et cela dès la détection d'une montée excessive de la tension instantanée d'étincelle.

Dès que le taux d'étincelles éjectées dépasse une certaine valeur par suite d'un accélération de la rotation de l'électrode, on peut également ralentir la rotation ou/et réduire la puissance des étincelles, par exemple en augmentant le temps de repos entre deux impulsions successives ou en diminuant l'intensité de ces impulsions, ou encore diminuer leur durée ou augmenter le gap.

Ajoutons que l'asservissement de la rotation de l'électrode-outil réglé selon les résultats de la mesure de la tension instantanée de chaque étincelle permet d'obtenir à tout instant de l'usinage la fréquence de rotation optimale, quels que soient
- les dimensions et la forme de l'électrode-outil,
- la "prise matière", ( c'est-à-dire la surface active soumise à l'électroérosion) des électrodes,
- la durée de l'étincelle,
- les conditions locales d'injection, de circulation et de renouvellement du fluide d'usinage et de refroidissement dans le gap,
- la puissance moyenne imposée par le générateur,
- la profondeur du gap,
- les matériaux constituant les électrodes et le liquide diélectrique d'usinage.

Le dispositif pour électroéroder avec une densité de courant élevée selon la présente invention et sa mise en oeuvre peuvent présenter une infinité de formes d'exécution. Seules certaines seront illustrées schématiquement par la description d'exemples de réalisation, à l'aide du dessin annexé, dans lequel,

la figure 1 schématise l'un des principes de fonctionnement du dispositif selon l'invention,

les figures 2 à 7 représentent des formes d'électrodes-outil pouvant être utilisées dans ce dispositif,

la figure 8 décrit un dispositif selon la présente invention, et la figure 9 illustre la variation du débit de matière en fonction de la vitesse de rotation de l'électrode.

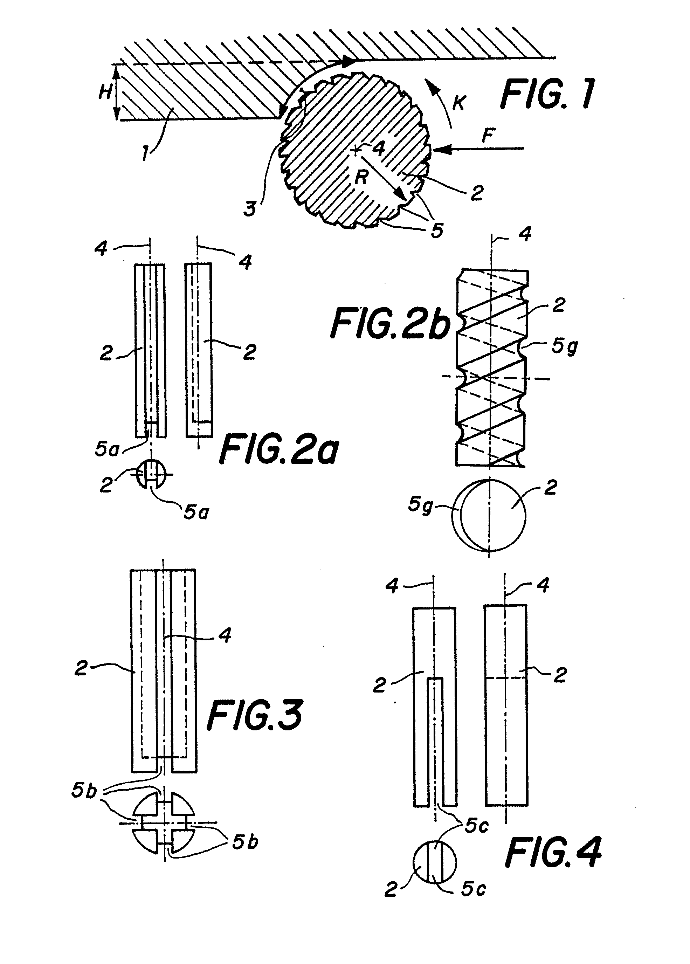

Dans la figure 1, 1 est la pièce à usiner et 2 une électrode-outil cylindrique servant à l'usinage et destinée à enlever de la pièce une hauteur H de matière. La flèche F indique la direction dans laquelle progresse l'électrode 2 par rapport à la pièce 1, considérée immobile, et dont elle est séparée par le gap 3 dans lequel se produisent les étincelles. En plus du mouvement d'avance de l'électrode-outil dans la direction indiquée par la flèche F, l'électrode tourne autour de son axe 4 dans le sens indiqué par la flèche K, de manière un peu analogue à celle d'une fraise mécanique. La fréquence de rotation peut varier dans une large mesure. A titre indicatif, elle peut par exemple se situer entre 50 et 5000 tours/minute pour une électrode ayant un rayon R compris entre 2 et 30 mm. Cette rotation, dont le sens peut d'ailleurs être inversé selon le cas, entraîne du diélectrique frais dans le gap 3 et évacue le diélectrique dégradé ainsi que les résidus et les bulles de gaz résultant de sa décomposition. Pour améliorer encore le renouvellement du liquide dans le gap 3, l'électrode 2 comporte à sa périphérie des rainures 5 qui font fonction d'aubes. Ces rainures peuvent être "droites", c'est-à-dire disposées parallèlement à l'axe 4 du cylindre, ou encore hélicoïdales. Cette dernière possibilité, qui présente des avantages considérables en usinage, est représentée à la Fig. 2b.

La surface active de l'électrode 2 peut par exemple comprendre au moins 75 % de la surface du cylindre (le reste étant occupé par les rainures) mais d'autres valeurs sont possibles selon les cas. Pour obtenir un rendement stable, il est préférable d'utiliser une électrode présentant une proportion de surface active constante sur toute la longueur du cylindre, ce qui est le cas des rainures hélicoïdales.

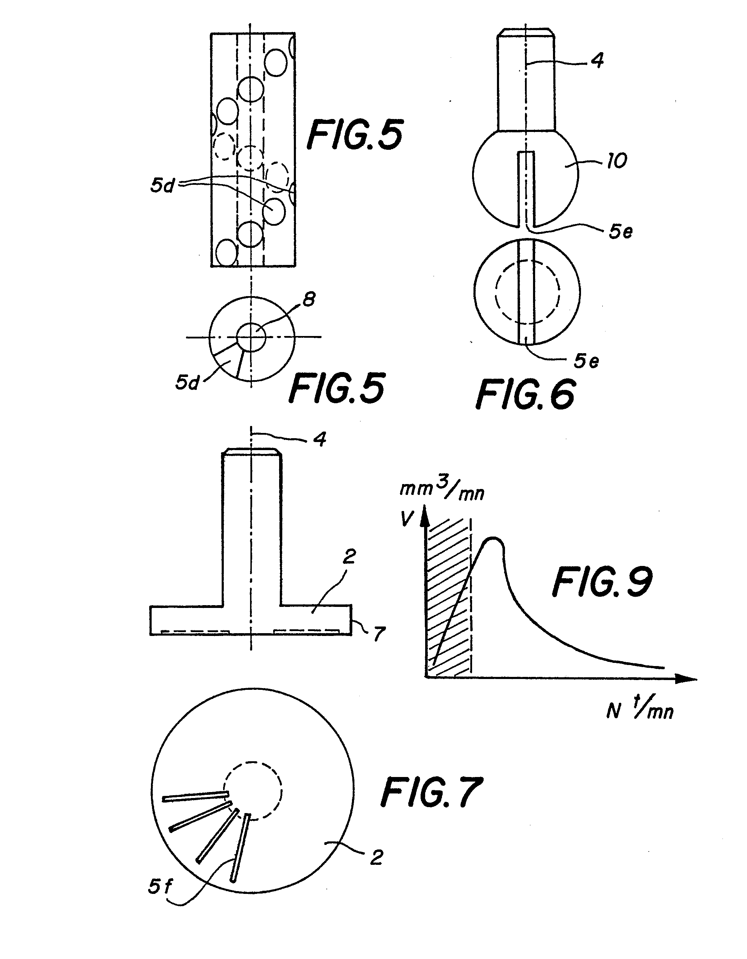

Les figures 2 à 5 montrent quelques formes préférées d'électrodes quasi-cylindriques, à rainure 5a borgne simple (Fig.2a), à rainure hélicoïdale 5g (Fig.2b) à quadruple rainure 5b (fig.3), à rainure 5c traversante (fig.4), tubulaire avec des perçages 5d en direction radiale (fig.5). Les rainures longitudinales 5a et 5b peuvent déboucher sur une ou plusieurs rainures de pied (non représentées).

Sur ces figures, les élémentes correspondant à ceux de la figure 1 portent les mêmes chiffres de référence que sur celle-ci.

Les électrodes cylindriques des figures 2 à 5 sont principalement destinées à creuser des trous ou cavités dans la pièce à usiner. C'est pourquoi leurs rainures 5a, 5b, 5c ,bien que jouant un rôle analogue à celui des rainures 5 de l'électrode de la figure 1, sont plus particulièrement adaptées à une injection forcée de liquide d'usinage. Ceci s'applique tout particulièrement au mode d'exécution de la figure 5 où les rainures sont remplacées par des trous radiaux 5d comunicant avec un canal central 8 qui peut être borgne ou ouvert à son extrémité libre. On peut alors créer une circulation forcée de liquide d'usinage dans le gap par injection de liquide dans ce canal à son extrémité proche du porte-outil.

Pour améliorer le renouvellement du diélectrique dans le gap, on peut également utiliser des électrodes à face rugueuse (non représentées), qui ne comporteront en général que peu ou pas de rainures.

Il est bien entendu que les formes d'électrodes illustrées aux figures 2 à 5 ne présentent aucun caractère limitatif. On peut mettre en oeuvre avantageusement une grande variété d'électrodes présentant par exemple d'autres formes, non-cylindriques, ou munies d'autres types de rainures ou de trous communiquant avec une amenée de diélectrique, ménagée à l'intérieur de l'électrode, ou traversant l'électrode de part en part.

Il peut en particulier être avantageux d'utiliser une électrode-outil telle que celle montrée à la figure 6, dont la surface utile est essentiellement sphérique et qui est munie d'une rainure 5e ou à la figure 7, qui schématise une électrode en forme de disque. Dans ce dernier cas on n'a esquissé que des rainures radiales rectilignes 5f fermées aux deux extrémités.

D'autres formes d'exécution sont possibles, par exemple des rainures en spirale ouvertes ou fermées, ou encore un système d'alimentation forcée analogue à celui de la figure 5. De plus, une denture (non représentée) peut être prévue sur le pourtour extérieur 7 du disque, en particulier lorsque celui-ci sert de bord d'attaque lors de l'électroérosion.

L'avantage de ces rainures, moulures, reliefs, perforations diverses est d'améliorer l'entraînement du liquide et de régulariser et d'accélérer son renouvellement dans la fente d'usinage. Elles canalisent vers l'extérieur du gap le flot de gaz et de particules produit par l'érosion des électrodes et la décomposition du diélectrique. Elles alimentent la fente d'usinage en diélectrique neuf et favorisent le refroidissement des électrodes et du diélectrique baignant cette fente.

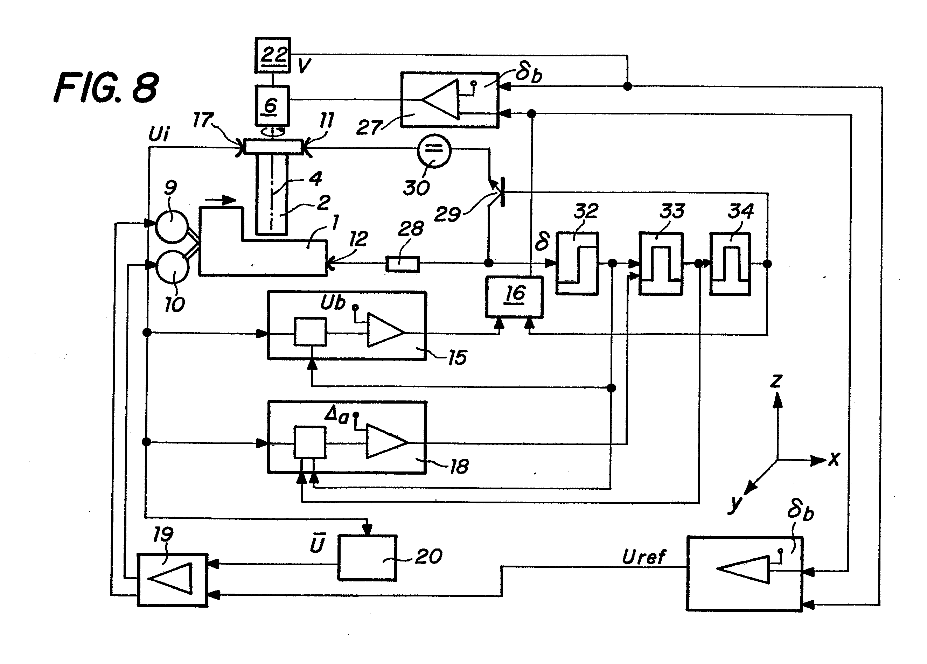

Une variante du dispositif selon la présente invention est illustrée à la figure 8, dans laquelle une pièce conductrice 1 est usinée grâce à une électrode-outil 2 rotative dont la rotation autour de son axe de symétrie 4 est commandée par le servo-moteur 6. Deux autres servo-moteurs 9 et 10 commandent les déplacements d'une table à mouvements croisés, non représentée, assurant les translations relatives entre la pièce 1 et l'électrode 2. Ces translations sont effectuées dans les directions des axes de coordonnées cartésiennes x et y, perpendiculaires à l'axe 4 et situés dans un plan perpendiculaire au plan de la figure 8.

Les contacts 11 et 12 amènent respectivement à l'électrode 2 et à la pièce 1 le courant d'usinage délivré par un générateur d'impulsions faisant éclater des étincelles entre la pièce 1 et l'électrode 2.

Les servo-moteurs 6, 9 et 10 sont contrôlés par une unité de commande numérique, de type connu en EDM, non représentée, ainsi que par un circuit d'asservissement décrit plus loin.

Le circuit générateur d'impulsions comporte une source de tension 30, montée en série avec un interrupteur électronique 29, schématisé sous la forme d'un transistor, une résistance variable 28 permettant de limiter l'intensité du courant d'usinage, une bascule de SCHMITT 32 pour détecter l'amorce d'une décharge et deux bascules monosta- bles 33 et 34 pour fixer respectivement la durée maximum de l'impulsion de tension, $T_p$, et celle de l'intervalle entre deux impulsions de tension succes-

sives, $T_o$.

Un circuit de mesure de la tension instantanée d'étincelle $U_i$ comporte le contact 17 sur l'électrode 2, relié à un premier détecteur 15 comportant un capteur de tension relié à la bascule 32. Ce détecteur indique au capteur le début de chaque étincelle afin de lui permettre de mesurer la tension instantanée $U_i$ au début de chaque étincelle. Ce détecteur 15 comporte également un comparateur afin de comparer la tension ainsi mesurée à une valeur de référence $U_b$ (dans cet exemple, $U_b = 20$ V), lui permettant ainsi de détecter les étincelles de bas niveau, c'est-à-dire pour lesquelles $U_i \leq U_b$. Ce circuit de mesure comporte aussi un circuit de comptage 16 qui détermine le taux instantané d'étincelles à bas niveau, $\delta$. Le contact 17 est aussi relié au détecteur 18, comportant un capteur de tension relié à la fois aux bascules 32 et 33. Elles lui indiquent le début et la fin des étincelles afin de lui permettre de déterminer la dérivée $\Omega$ de la tension instantanée en fonction du temps au cours de chaque étincelle. Ce détecteur 18 comporte aussi un comparateur comparant cette dérivée $\Omega$ à une valeur de référence $\Omega_a$, lui permettant ainsi de détecter les étincelles éjectées, c'est-à-dire celles pour lesquelles $\Omega \geq \Omega$ a. Enfin, ce circuit comporte également un détecteur 20 comportant un capteur de tension ainsi qu'un circuit de calcul lui permettant de déterminer la valeur moyenne $\overline{U}$ à partir des tensions instantanées (ou d'usinage) mesurées en continu au cours de l'usinage.

Un circuit d'asservissement comporte l'amplificateur 27 relié au servo-moteur 6, au circuit de comptage 16, ainsi qu'à un générateur de tension 21 délivrant une tension moyenne de référence $U_{ref}$ (ici, $U_{ref} = 25$ V). Ce générateur 21 est agencé de manière ajuster la valeur de $U_{ref}$ pour que le taux idéal d'étincelles à bas-niveau $\delta_b$ (ici $\delta_b = 5\%$) puisse être obtenu avec des fréquences de rotation compatibles avec les possibilités du servo-moteur 6. Ceci permet de règler la fréquence de rotation de l'électrode 2 de façon que $\delta \leq \delta_b$. Ce circuit comporte aussi un amplificateur 19 lui-même relié au détecteur 20 et aux servo-moteurs 9 et 10 ainsi qu'au générateur 21, de façon à règler la vitesse d'avance de l'électrode 2, c'est-à-dire la vitesse de la translation relative de l'électrode 2 et de la pièce 1, de manière que $\overline{U}$ reste voisine, de part et d'autre, de $U_{ref}$. Un tachymètre 22 relié au servo-moteur 6, à l'amplificateur 27 et au générateur 21, permet de mesurer la fréquence instantanée V de rotation de l'électrode 2.

Dès le début du cycle d'usinage, le détecteur 15 mesure la tension instantanée d'étincelle $U_i$ et la compare à la valeur de référence $U_b$. Le circuit 16 prend en compte toute étincelle de bas niveau, c'est-à-dire toute mesure pour laquelle $U_i \leq U_b$ et détermine ainsi le taux instantané d'étincelles à bas niveau $\delta$.

L'amplificateur-comparateur 27 compare ce taux instantané $\delta$ à un taux de référence $\delta_b$ prédéterminé, défini dans l'introduction, et qui correspond au rendement maximum.

De plus, il pilote le servo-moteur 6 afin de règler la fréquence de rotation V de l'électrode 2 de façon

que $\delta \leq \delta_b$. $\delta$ étant le plus proche possible de $\delta_b$ sans jamais le dépasser. En fait, dès que $\delta \geq \delta_b$, l'amplificateur 27 commande une augmentation de la fréquence V, ce qui fait diminuer $\delta$. Dès que $\delta$ atteint la valeur $\delta_b$, l'amplificateur 27 maintient constante la fréquence V. Si $\delta$ diminue en s'écartant de la valeur $\delta_b$, l'amplificateur 27 commande une diminution de la fréquence V jusqu'à ce que $\delta$ atteigne la valeur $\delta_b$. Dans cet exemple, la fréquence V peut varier de 50t/mn à 5000t/mn. Avec un courant-crête de 48A, par exemple, il a été possible de réaliser en enlèvement de matière de 355 mm$^3$ /mn dans un acier d'outillage traité.

Cette installation permet non seulement d'asservir la fréquence de rotation de l'électrode 2 à la tension instantanée d'étincelle, mais aussi d'asservir la vitesse d'avance.

En effet, l'amplificateur 19 compare le tension moyenne $\overline{U}$ calculée par 20 à la valeur de référence $U_{ref}$ délivrée par le générateur 21 et commande les servo-moteurs 9 et 10 de façon à maintenir $\overline{U}$ sensiblement égale à $U_{ref}$, la valeur de la tension moyenne d'usinage de référence (ici, $U_{ref} = 25$V).

Cette installation permet également d'éviter les étincelles éjectées et donc les défauts de surface correspondants. En effet, le détecteur 18 compare la dérivée $\Omega$ de la tension instantanée d'étincelle à la valeur de référence $\Omega_a$. Si $\Omega \geq \Omega_a$, l'étincelle est interrompue par la bascule 33.

Si, lorsque l'électrode 2 est mise en rotation à la fréquence minimum, le comparateur 27 détecte un taux $\delta \leq \delta_b$, le générateur 21 commande une diminution de la fente d'usinage, par un circuit non représenté, afin d'ajuster $U_{ref}$ à une valeur inférieure à la valeur choisie initialement. Au contraire, si lorsque l'électrode 2 est est mise en rotation à sa fréquence maximale, le comparateur 27 détecte un taux $\delta \geq \delta_b$, le générateur 21 commande une augmentation du gap afin d'ajuster $U_{ref}$ à une valeur supérieure à la valeur initiale.

D'autres variantes d'une telle installation peuvent évidemment se révéler très avantageuses. Par exemple, on peut relier le circuit d'asservissement et la commande numérique (non représentée) à un servo-moteur qui peut actionner verticalement l'électrode 2 selon l'axe de rotation 4 de l'électrode 2. Cette liaison est effectuée à travers un comparateur supplémentaire de façon à règler la vitesse de ce déplacement, par exemple un mouvement de va-et-vient, de façon que $\delta$ reste égal ou inférieur à $\delta_b$. Il est alors avantageux d'utiliser une électrode munie également de rainures orthogonales à l'axe z.

Il est également possible d'utiliser comme électrode-outil, non plus une électrode rotative, mais une électrode animée d'un mouvement linéaire parallèle à la surface d'usinage, parallèle en particulier à l'axe de coordonnées cartésiennes z. Citons par exemple un fil-électrode traversant de part en part la pièce à usiner, défilant de manière continue dans la zone d'usinage, ce mouvement étant accéléré afin de favoriser le renouvellement du liquide dans le gap. Cette accélération peut être asservie au degré de pollution du diélectrique afin de maintenir la "situation critique", comme décrit ci-dessus, pour l'asservissement de la fréquence de rotation d'une électrode rotative. On peut réutiliser le fil, peu usé par suite de son défilement rapide, afin de limiter sa consommation. On peut prévoir des rainures ou évidements, de préférence perpendiculaires à ce mouvement linéaire, destinés à favoriser la circulation du diélectrique dans la zone d'usinage.

Il est possible non seulement de combiner le mouvement d'avance de l'électrode-outil le long de la trajectoire d'usinage avec un mouvement angulaire tangentiel à la surface d'usinage ou avec un mouvement linéaire parallèle à cette surface, mais aussi d'associer ces trois types de mouvements. On peut ainsi combiner une rotation de l'électrode, tangentielle à la surface usinée, à un mouvement de va-et-vient parallèle à son axe de rotation (et donc à cette surface) . L'électrode peut également , tout en tournant sur elle-même, effectuer une deuxième rotation autour d'un axe parrallèle à l'axe de cette première rotation mais distinct de celui-ci. Ces mouvements rotatifs ou linéaires peuvent également être associés à diverses pulsations, vibrations, oscillations de l'électrode, telles, par exemple, que les microtrajectoires décrites dans le brevet suisse 646.894, ainsi qu'à divers mouvements de va-et-vient linéaires ou angulaires.

L'axe de symétrie 4 de l'électrode-outil n'est pas nécessairement perpendiculaire à la direction F (voir figure 1) de l'avance de l'électrode-outil relativement à la pièce à usiner. Cette inclinaison peut varier au cours de l'usinage. Il est aussi possible de mouvoir linéairement ou angulairement la pièce 1 relativement à l'électrode-outil 2, réalisant par exemple ainsi un "tournage EDM" au lieu d'un "fraisage EDM".

Au lieu de suivre l'évolution du degré de pollution du diélectrique grâce à la mesure de la tension instantanée d'étincelle, il est envisageable de mesurer un autre paramètre du gap, caractéristique de ce degré de pollution, tel, par exemple, la résistivité du diélectrique. La résistivité du diélectrique peut être appréhendée par la mesure d'un courant durant le temps d'attente précédant généralement l'éclatement de l'étincelle. Or, dans le procédé décrit ici, nous cherchons à minimiser le temps d'attente moyen et par suite l'intervalle de mesure risque d'être réduit à néant lors des phases critiques.

La mesure de la résistivité du diélectrique pourrait être conduite durant la pause entre deux étincelles successives, mais il faut alors prévoir une source auxiliaire, ce qui conduit à un dispositif compliqué.

De plus, de telles mesures de résistivité ne donnent pas une idée complète de la pollution. Elles permettent de détecter une pollution dûe à des excès de particules en suspensions dans le diélectrique et qui tend à faire diminuer sa résistivité, mais non l'augmentation de la teneur en bulles de gaz qui tend au contraire à faire augmenter sa résistivité.

Au lieu de supprimer les étincelles éjectées en interrompant l'étincelle, on peut prévoir des dispositifs différents, permettant de ralentir la rotation de l'électrode, et /ou réduire la puissance moyenne des étincelles et/ou diminuer leur durées et/ou augmenter le gap, en réponse à un signal émis par le détecteur 18 et indiquant que la dérivée de la tension instantanée d'étincelle est supérieure à une valeur de référence $\Omega_a$ .

On l'a vue ci-dessus, le principal avantage du dispositif et du procédé de la présente invention est de permettre de travailler avec une densité de courant d'usinage inusitée en EDM, c'est-à-dire supérieure à 10A/cm$^2$, de préférence supérieure à 50A/cm$^2$.

Ceci permet, en particulier, non seulement de forer ou de percer des trous circulaires, d'aléser et de polir comme cela était déjà possible en EDM avec des électrodes-outil rotatives connues, mais aussi de réaliser un véritable "fraisage" par étincelage érosif. Avec une électrode de forme très simple on peut maintenant usiner des formes très compliquées. Surtout, grâce à cette densité de courant élevée, avec des électrodes de petites dimensions, on peut usiner des pièces de grandes dimensions, contrairement à l'électroérosion traditionnelle où l'électrode-outil a sensiblement le même volume que l'empreinte à éroder.

Etant de formes simples, ces électrodes peuvent être fabriquées en série, de façon analogue aux fils-électrodes déjà connus. Ceci permet un progrès considérable par rapport à l'électrode traditionnelle d'enfonçage fabriquée sur mesure pour chaque usinage particulier.

On peut même réaliser des formes qu'on ne pouvait obtenir que très difficilement en fraisage classique, telles des rainures en T, par exemple, ou des moules pour parois de renfort ou d'autres profils comportant des évidements longs et étroits, réalisés dans des plaques en acier trempé. En effet, selon la présente invention on peut utiliser en fraisage EDM des électrodes-outil longues et étroites, alors que les outils de fraisage conventionnel doivent être massifs pour être efficaces, car sinon ou est obligé de fraiser trop lentement pour éviter de casser l'outil.

De plus, comme le dispositif et le procédé de la présente invention permettent de maintenir l'usinage en permanence dans une "situation critique" (décrite ci-dessus) qui correspond à la quantité maximum de matière qu'on peut éroder pour une puissance donnée, on peut même optimiser l'usinage, en travaillant avec le meilleur rendement possible. Ajoutons qu'il n'est plus nécessaire de recourir aux contre-mesures connues pour stabiliser l'usinage. On évite ainsi de ralentir ou d'interrompre ce dernier, ce qui élimine toute perte de rendement. Grâce à un nouveau paramètre, la fréquence de rotation de l'électrode, ou sa vitesse de défilement dans le cas d'un fil-électrode, il est possible de travailler avec une vitesse d'avance maximale.

On compense la diminution du gap dûe aux grandes vitesses d'avance, et la diminution de la durée de vie du liquide diélectrique d'usinage que en résultait, en augmentant simplement la fréquence de rotation de l'électrode.

Tout ceci rend possible d'usiner avec une grande stabilité, à la vitesse maximum et avec un rendement maximum.

Ils présentent aussi l'avantage d'être d'une grande simplicité en regard des résultats obtenus .En effet, avec un seul type de capteur ils permettent de prendre en compte de nombreux paramètres indépendants : surface d'attaque, profondeur du gap, dimension et forme de l'électrode-outil, matériaux en présence, conditions locales de circulation et de renouvellement du diélectrique à travers le gap, densité de courant d'usinage, etc... L'optimisation peut être réalisée en agissant principalement sur un seul paramètre : la vitesse de rotation ou de défilement de l'électrode-outil. De plus, comme il était de toute façon nécessaire de mesurer la tension instantanée d'étincelle pour ajuster la vitesse d'avance, il n'est pas nécessaire de prévoir des capteurs et des mesures supplémentaire pour mettre en oeuvre la présente invention. L'organe permettant de mesurer la tension instantanée d'étincelle préexistait sur les machines EDM usuelles.

L'intérêt de la présente invention est encore augmenté du fait qu'on ne connaît pas à ce jour de capteurs capables de suivre en temps réel certains des paramètres cités ci-dessus, en particulier la surface active (ou "prise matière"), la profondeur du gap ou la forme de la pièce usinée, qui peuvent de plus être extrèmement variables au cours du l'usinage.

Comme il suffit d'agir en continu sur un seul paramètre, on peut facilement optimiser l'usinage en stabilisant en permanence l'usinage à la situation critique déjà mentionnée,( dans laquelle le diélectrique est maintenu au voisinage de sa destruction),tout en évitant la destruction du diélectrique. Cette action étant une accélération d'un mouvement linéaire ou rotatif, l'inertie mécanique à vaincre est peu importante, d'où un faible temps de réponse, et une bonne "nervosité" du système. Le renouvellement du diélectrique présent dans le gap est ainsi accéléré et régularisé de façon homogène et continue, dès que nécessaire. Contrairement aux dispositifs et procédés connus, la présente invention permet ainsi, tout en se maintenant à un rendement et à une vitesse d'usinage maximum, d'écarter tout risque de destruction du diélectrique et d'éviter toute dégradation des surfaces usinées par suite de mauvaises conditions d'usinage, de l'apparition d'un taux trop élevé de bulles de gaz et d'étincelles éjectées.

Par suite de sa simplicité, de sa souplesse, et de sa flexibilité, le dispositif de la présente invention permet, en particulier grâce à sa rapidité de réponse, de compenser les variations brutales et imprévisibles de la surface active. En effet, comme en fraisage conventionnel, la surface active, c'est-à-dire la surface soumise à l'érosion, peut varier énormément et de façon inopinée, surtout lorsqu'il s'agit d'une passe de semi-finition, la surface à usiner ayant été dégrossie auparavant par tout procédé connu, EDM ou non. On ne peut alors prévoir les variations de la "prise matière" (ou "surface active" ou "surface d'attaque"), comme, par exemple, la hauteur H illustrée à la figure 1.

Lorsque la surface à usiner présente de grandes irrégularités, en fraisage conventionnel on travaille en général au ralenti afin de tenir compte de la pire situation possible. Cette précaution n'est plus utile avec le dispositif de la présente invention, car il est suffisamment flexible pour faire varier très rapidement la vitesse de l'électrode-outil afin de compenser la variation de la prise-matière, et ceci sans qu'une destruction du diélectrique ait le temps d'intervenir.

De plus, toute forme d'électrode-outil peut être adaptée sur le dispositif de la présente invention. Ce dernier permet en effet de piloter la fréquence de rotation d'une électrode-outil quelles que soient les dimensions et la forme de cette dernière, sans nécessiter aucun changement de programmation.

Donc , grâce à la stabilité et la fiabilité apportée à l'usinage par le dispositif de la présente invention et également grâce à sa simplicité, ce dispositif contribue à automatiser facilement et de façon très satisfaisante un usinage EDM à grande vitesse.

## Revendications

1. Dispositif d'usinage par électroérosion, comportant
- une électrode-outil (2) animée d'un mouvement rotatif ou linéaire supplémentaire au mouvement d'avance normal le long de la trajectoire d'usinage et constituée, soit en forme d'un volume de révolution autour de son axe (4) de rotation, soit par un fil-électrode,
- au moins un circuit de mesure (15, 16, 17) agencé de manière à évaluer le degré de pollution correspondant à chaque étincelle, du liquide diélectrique baignant la fente d'usinage, à le comparer à un degré de pollution de référence et à émettre un signal s'il atteint ou dépasse cette valeur de référence,
- et au moins un circuit d'asservissement (6, 21, 27) agencé de manière à moduler en fonction de ce signal, soit la fréquence de rotation d'une électrode-outil rotative, soit l'accélération de la vitesse de défilement d'un fil-électrode.

2. Dispositif selon la revendication 1, caractérisé par le fait que les circuits de mesure et d'asservissement comportent également des organes (18, 19, 20) aptes, soit à détecter l'apparition d'étincelles éjectées, à émettre un signal correspondant et à interrompre l'étincelle en cours suite à ce signal, soit à déterminer le taux de ces étincelles éjectées ,à ralentir la rotation de l'électrodes et/ou réduire la puissance moyenne et/ou la durée des étincelles et/ou augmenter le gap.

3. Dispositif selon l'une des revendications 1 et 2, caractérisé par le fait que le circuit de mesure comporte
- un détecteur (18) capable de déterminer la dérivée $\Omega$ de la tension instantanée de chaque étincelle et de comparer cette dérivée à une valeur de référence prédéterminée $\Omega_a$ , et
- un organe émettant un signal dès que $\Omega \geq \Omega_a$.

4. Dispositif selon la revendication 1, caractérisé par le fait que le circuit de mesure comporte un capteur (15) mesurant la tension instantanée $U_l$ de chaque étincelle, un comparateur comparant cette mesure à une valeur de référence $U_b$ prédéterminée et un circuit de comptage (16) déterminant le taux $\delta$ des étincelles dites de bas-niveau, pour lesquelles $U_i \leq U_b$ et le comparant à un taux de référence prédéterminé $\delta_b$.

5. Dispositif selon la revendication 1, caractérisé par le fait que le circuit de mesure comporte un capteur mesurant le courant durant le temps d'attente de chaque étincelle.

6. Dispositif selon la revendication 1, caractérisé par le fait que les circuits de mesure et d'asservissement comportent également des organes (19, 20) aptes à déterminer la valeur moyenne $\overline{U}$ de la tension instantanée, à la comparer à une valeur $U_{ref}$ de référence et à moduler la vitesse d'avance en maintenant $\overline{U}$ autour de $U_{ref}$.

7. Dispositif selon l'une des revendications 1 à 6 caractérise par le fait que l'électrode-outil (2) présente une surface active très inférieure à celle de l'empreinte à éroder.

8. Dispositif selon l'une des revendications 1 à 6 caractérisé par le fait que l'électrode-outil (2) est rotative et comporte au moins une rainure ou moulure (5) hélicoïdale.

9. Dispositif selon l'une des revendications 1 à 6 caractérisé par le fait que l'électrode-outil (2) est rotative et comporte au moins une rainure ou moulure (5) parallèle à son axe de rotation.

10. Dispositif selon l'une des revendications 1 à 7 caractérisé par le fait que l'électrode-outil (2) est rotative et comporte un canal intérieur d'amenée de liquide d'usinage, communiquant avec au moins une perforation ou rainure (5) ménagée à la surface, et est reliée, de préférence, à une installation apte à injecter sous pression le liquide d'usinage dans la fente d'usinage, à travers cette perforation ou rainure.

11. Dispositif selon l'une des revendications 1 à 8, caractérisé par le fait que l'électrode-outil (2) est rotative et de forme quasi-cylindrique, sphérique ou discoïdale.

12. Procédé d'usinage par étincelage érosif dans lequel, soit une électrode-outil rotative et en forme de volume de révolution soit un fil-électrode au défilement accéléré, améliore la circulation d'un liquide diélectrique dans la zone d'usinage et permet d'usiner avec une densité de courant supérieure à 10 A/cm$^2$, tandis qu'on évalue pour chaque étincelle le degré de pollution de ce liquide dans la fente d'usinage et qu'on module, en fonction de ce degré, soit l'accélération du fil-électrode ou la vitesse de rotation de l'électrode-outil, de façon à maintenir une situation critique dans laquelle le degré de pollution, légèrement inférieur à celui qui provoquerait la destruction du liquide diélectrique, correspond à un enlèvement de matière maximum.

13. Procédé selon la revendication 12 dans lequel la densité de courant utilisée est supérieure à 50 A/cm$^2$, de préférence supérieure à 90A/cm$^2$.

14. Procédé selon la revendication 12 dans lequel le volume de l'électrode-outil est très inférieur au volume de l'empreinte à éroder.

15. Procédé selon la revendication 12 dans lequel l'enlèvement de matière est supérieur à 350 mm /mn.

0281512

FIG. 1

FIG.2a

FIG.2b

FIG.3

FIG.4

0281512

FIG.5

FIG.5

FIG.6

FIG.9

FIG.7

**FIG. 8**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 9, no. 286 (M-429)[2009], 13 novembre 1985; & JP-A-60 127 920 (MITSUBISHI DENKI K.K.) 08.07.1985<br>----- | 1,7 | B 23 H  1/02<br>B 23 H  1/10 |

**DOMAINES TECHNIQUES RECHERCHES (Int. Cl.4)**

B 23 H

Le présent rapport a été établi pour toutes les revendications

| Lieu de la recherche | Date d'achèvement de la recherche | Examinateur |
|---|---|---|
| LA HAYE | 09-05-1988 | DAILLOUX C. |